# FASCICULE DE BREVET EUROPEEN

(11) **EP 2 314 018 B1**
(45) Date de publication et mention de la délivrance du brevet: **28.12.2011**
(21) Numéro de dépôt: 09784462.5
(22) Date de dépôt: 03.07.2009
(51) Int. Cl.: H04L 12/26, H04L 12/56, H04L 12/42

(54) **PROCEDE DE COMMUNICATION ENTRE UNE PLURALITE DE NOEUDS**
VERFAHREN ZUM KOMMUNIZIEREN ZWISCHEN MEHREREN KNOTEN
METHOD FOR COMMUNICATING BETWEEN A PLURALITY OF NODES

(30) Priorité: 23.07.2008 FR 0855018
(43) Date de publication de la demande: 27.04.2011
(73) Titulaire: France Telecom, 75015 Paris (FR)
(72) Inventeur: BONALD, Thomas, F-78960 Voisins Le Bretonneux (FR); OUESLATI, Sara, F-92320 Chatillon (FR); ROBERTS, James, F-78960 Voisins Le Bretonneux (FR)
(86) Numéro de dépôt international: PCT/FR2009/051301
(87) Numéro de publication internationale: WO 2010/010266

(56) Documents cités:
- EP-A- 1 814 265
- US-A1- 2003 165 146
- US-A1- 2006 222 007

## Description

L'invention concerne une technique de communication entre une pluralité de noeuds, les noeuds étant organisés suivant un anneau.

On se place ici dans un réseau de communication, dans lequel des noeuds sont organisés suivant un anneau, leur permettant de communiquer entre eux. Plus précisément, les noeuds du réseau de communication sont connectés par deux anneaux unidirectionnels, un par sens de rotation. Cette topologie est particulièrement adaptée aux réseaux métropolitains, du fait de sa résistance aux pannes : en cas de panne entraînant une coupure des deux anneaux en un même point, un nouvel anneau logique peut être formé en joignant les deux anneaux physiques en amont et en aval du point de coupure.

On s'intéresse par la suite au mécanisme de contrôle d'accès à l'un des deux anneaux ou à l'anneau logique formé suite à une panne. Un anneau comprend une ou plusieurs ressources d'anneau. Dans un anneau à découpage temporel, une durée de référence est divisée en intervalles de temps de durée fixe, un intervalle de temps pouvant servir à transmettre un ou plusieurs paquets. Par la suite, on appelle ressource de transmission un sous-ensemble d'une des ressources de l'anneau, accessible pendant un intervalle de temps donné, appelé également fenêtre de transmission. L'anneau permet l'acheminement de divers flux de données dont certains ont des contraintes de délai, par exemple des flux conversationnels ou audiovisuels.

De nombreux mécanismes ont été proposés pour contrôler l'accès à la ressource de transmission. Pour être efficace, ceux-ci doivent permettre une réutilisation spatiale, c'est-à-dire l'utilisation successive d'une même ressource de transmission pour des communications impliquant différentes parties de l'anneau. Pour cela, la ressource de transmission doit être libérée par le noeud destinataire des données transmises dans la fenêtre de transmission dès réception de celles-ci.

Par ailleurs, il faut également éviter qu'un noeud ne monopolise la ressource de transmission, par exemple du fait d'un meilleur positionnement sur l'anneau. A titre d'exemple, les noeuds étant numérotés de 1 à N dans le sens de rotation sur l'anneau, lorsque le noeud 1 transmet un volume de données important à destination du noeud N, un noeud situé entre ces deux noeuds peut se voir refuser l'accès à la ressource de transmission. En l'absence de tout contrôle, le noeud 1 peut ainsi accéder librement à la ressource et potentiellement monopoliser celle-ci. Il est donc nécessaire de réguler l'accès des noeuds aux ressources de transmission. Ce contrôle d'accès doit être rapide pour éviter la mise en attente des paquets des flux ayant des contraintes de délai.

Un mécanisme défini par la norme IEEE 802.17 "Resilient Packet Ring" consiste à ne bloquer aucun accès à la ressource de transmission tant que les tailles des files d'attente respectives des paquets à transmettre des différents noeuds sont inférieures à un seuil prédéterminé. Un tel mécanisme est décrit dans l'article "IEEE 802.17 Resilient Packet Ring Tutorial", de F. Davik et al. publié dans le "IEEE Communications Magazine" en mars 2004. En cas de congestion détectée par un noeud donné, celui-ci en informe les noeuds situés en amont sur l'anneau, c'est-à-dire les noeuds qui sont susceptibles d'insérer du trafic dans l'anneau. La réception de cette information de congestion par un des noeuds de l'anneau conduit celui-ci à réduire sa propre consommation de ressources de transmission. Le système est donc réactif, c'est-à-dire qu'une action est prise en réponse à la détection d'une congestion. Le document US2006/222007 décrit un tel procédé de communication entre des noeuds organisés en anneau, mettant en oeuvre un mécanisme « Resilient Packet Ring ».

Le choix du seuil prédéterminé ou seuil de détection de congestion n'est pas aisé. En effet, un seuil trop faible empêche une pleine utilisation des ressources, certains noeuds réduisant leur propre consommation de ressources de transmission alors qu'il n'y a pas de réelle congestion. A contrario, un seuil trop élevé augmente les délais d'attente de certains noeuds, un noeud ne réagissant que lorsque le seuil de détection de congestion est atteint. Du fait de la nature aléatoire du trafic, il n'existe pas de choix optimal pour ce seuil.

La technique antérieure connue ne répond donc pas de manière satisfaisante au problème de l'accès aux ressources de transmission dans un anneau à découpage temporel. Avec un seuil suffisamment grand pour permettre une utilisation efficace de la bande passante, le mécanisme peut provoquer des famines ponctuelles pour certains noeuds, qui peuvent perturber des applications sensibles au délai d'attente, telles que des applications de type voix ou vidéo.

La demande de brevet US2007/029744 propose une mise en oeuvre par un noeud d'un anneau à découpage temporel d'un mécanisme de réservation d'une fenêtre de transmission. Dans un mode de réalisation, le noeud réserve une fenêtre de transmission dès que sa file d'attente d'émission contient des paquets en attente de transmission. En variante, le noeud réserve la fenêtre de transmission uniquement s'il détecte une situation de congestion. Le mode de réalisation décrit n'est pas satisfaisant en ce que, une fois de plus, un noeud peut monopoliser une partie des ressources de l'anneau en réservant des ressources de transmission de façon quasi-continue. La variante présente en outre l'inconvénient de mettre en oeuvre le mécanisme de réservation uniquement lorsque la congestion est détectée. Il est également rappelé que le problème lié à la définition des seuils, tel que décrit ci-dessus, se pose de nouveau.

Un des buts de l'invention est de remédier à des insuffisances/inconvénients de l'état de la technique et/ou d'y apporter des améliorations.

L'invention a pour objet un procédé de communication entre une pluralité de noeuds, les noeuds étant organisés suivant un anneau, ledit anneau étant doté de ressources de transmission dont l'une au moins est une ressource, dite de contrôle, dédiée à la transmission d'informations de contrôle et associée à au moins une ressource de transmission, ledit procédé comprenant l'étape suivante mise en oeuvre par un noeud de l'anneau :
- une étape de réception d'au moins une information relative à une réservation d'une fenêtre de transmission de la ressource de transmission reçue sur la ressource de contrôle associée ;
caractérisé en ce que, si la fenêtre de transmission est réservée par un autre noeud de l'anneau, il comprend en outre :
- une étape de comparaison de volumes de réservations de ressources de l'anneau respectivement effectuées par le noeud et l'autre noeud pendant une période de référence ;
- une étape de préemption de ladite réservation de la fenêtre de transmission en fonction du résultat de l'étape de comparaison.

Il est à noter que l'invention s'applique tout type d'anneau, que la durée des fenêtres de transmission soit fixe ou variable.

Le procédé permet ainsi d'améliorer l'accès aux ressources, indépendamment d'une détection d'une congestion. Il permet d'éviter ainsi la survenue de situations de congestions. Le mécanisme de réservation, tel que proposé, comprenant une préemption éventuelle d'une réservation effectuée par un autre noeud permet de garantir une meilleure répartition des ressources entre les différents noeuds de l'anneau. Il permet en outre de garantir un débit minimum à chacun des noeuds de l'anneau. En effet, ce mécanisme de réservation de fenêtres de transmission des ressources de transmission assure qu'une fraction minimum des ressources est disponible pour chaque noeud, ce qui garantit de faibles délais d'accès à la ressource de transmission tant que le trafic des noeuds de l'anneau n'excède pas la capacité totale de l'anneau.

De plus, par rapport à d'autres méthodes, dites préventives, c'est-à-dire visant à prévenir la survenue de situations de congestion, l'utilisation des ressources est plus efficace. A titre d'exemple de méthode préventive, le mécanisme décrit dans l'article intitulé "Metaring : A Full-Duplex Ring with Fairness and Spatial Reuse," de I. Cidon et al, publié dans les actes de la conférence IEEE INFOCOM, Juin 1990, consiste à autoriser un quota de paquets pouvant être transmis par cycle pour chaque noeud, le cycle étant déterminé par le temps de parcours sur l'anneau d'un paquet de contrôle. Le choix d'un quota trop petit empêche une pleine utilisation des ressources, les noeuds ne pouvant plus émettre après avoir épuisé leur quota, même si une ou des ressources de transmission sont disponibles. Le choix d'un quota trop grand augmente quant à lui les délais d'attente, un noeud pouvant monopoliser la ressource de transmission tant que son propre quota de paquets transmis sur un cycle n'est pas atteint. Le procédé revendiqué ne présente pas ce type d'inconvénients, les noeuds préemptant des réservations de fenêtres de transmission en fonction d'observations réalisées sur les réservations effectuées par les autres noeuds de l'anneau. Ainsi, le procédé permet de répartir les ressources de transmission en fonction du fonctionnement courant sur l'anneau et non en fonction de quotas ou de seuils prédéterminés.

Une ressource de contrôle peut être associée à une ou à des ressources de transmission.

A titre d'exemple, l'anneau peut être optique et les ressources de l'anneau peuvent être composées de plusieurs longueurs d'onde. Une ressource de l'anneau est découpée en une ou plusieurs fenêtres de transmission de durée fixe. La ressource de transmission est constituée d'un sous-ensemble d'une ressource de l'anneau, accessible lors de l'occurrence d'une des fenêtres de transmission. Une des longueurs d'onde peut être dédiée aux ressources de contrôle et les autres aux ressources de transmission.

L'information relative à une réservation d'une fenêtre de transmission de la ressource de transmission peut être par exemple un identifiant du noeud ayant effectué une réservation.

Dans un anneau à multiplexage temporel synchrone, les fenêtres de transmission sont de durée fixe. Dans ce cas, le volume de réservations effectuées par un noeud correspond au nombre de fenêtres de transmission réservées. La durée de référence peut être déterminée à partir du passage d'une fenêtre de transmission de synchronisation.

Dans un anneau à multiplexage temporel asynchrone, les fenêtres de transmission sont de durée variable. Dans ce cas, le volume de réservations effectuées par un noeud correspond à la durée cumulée de fenêtres de transmission réservées. La durée de référence peut être déterminée à partir du passage d'un drapeau de synchronisation sur une fenêtre de transmission.

Dans un premier mode de réalisation, l'étape de préemption est effectuée lorsque le volume de réservations de ressources de l'anneau effectuées par l'autre noeud sur la période de référence est supérieur d'un volume prédéterminé à celui du noeud.

Dans ce premier mode de réalisation, les noeuds de l'anneau ont un poids identique. Ainsi, lorsque le volume de réservations effectuées par l'autre noeud est inférieur au volume de réservations effectuées par le noeud, le noeud ne préempte pas la réservation effectuée par l'autre noeud.

Dans un deuxième mode de réalisation, un poids étant affecté par noeud, l'étape de préemption est effectuée lorsque le rapport des volumes respectifs de réservations de ressources de l'anneau effectuées par l'autre noeud et le noeud sur la période de référence est supérieur au rapport des poids respectifs desdits noeuds.

Dans ce deuxième mode de réalisation, les noeuds de l'anneau ont des poids respectifs différents. On peut par exemple choisir d'affecter un poids plus élevé à un noeud qui va essentiellement transmettre des données liées à des applications sensibles à un délai de transmission. Ainsi, en prenant en compte lors de l'étape de comparaison les poids respectifs du noeud et de l'autre noeud, il est possible de garantir un accès aux ressources de transmission en fonction des poids affectés.

De plus, l'étape de préemption est effectuée en fonction d'un résultat d'une étape de comparaison entre le volume de réservations de ressources de l'anneau effectuées par le noeud et un volume de paquets en attente de transmission par le noeud.

II n'est pas nécessaire de préempter une réservation effectuée par l'autre noeud lorsque le noeud a déjà réservé un volume de fenêtres de transmission nécessaire à la transmission des paquets en attente.

En outre, lorsque la fenêtre de transmission est libre mais réservée par l'autre noeud, le procédé comprend :
- une étape de recherche d'un noeud intermédiaire situé dans l'anneau entre le noeud et ledit autre noeud et à destination duquel au moins un paquet est à transmettre ;
- si un tel noeud intermédiaire est trouvé, une étape de transmission d'au moins un paquet à destination du noeud intermédiaire dans la fenêtre de transmission.

Ceci permet d'améliorer une utilisation des ressources de l'anneau. En effet, on tire parti de l'organisation en anneau des noeuds en permettant à un noeud d'utiliser une fenêtre de transmission d'une ressource de transmission libre mais réservée pour l'autre noeud pour émettre à destination d'un noeud intermédiaire situé entre le noeud et l'autre noeud dans là structure de l'anneau. Le procédé permet ainsi une réutilisation spatiale de la fenêtre de transmission d'une ressource de transmission libre mais réservée par l'autre noeud.

Cette transmission de type opportuniste assure une pleine utilisation des ressources. En ordonnançant l'émission des paquets dans les ressources de transmission qui lui sont réservées ou qu'il utilise de manière opportuniste, un noeud minimise le délai d'accès pour les applications sensibles au délai d'attente telles que des applications conversationnelles ou audiovisuelles.

L'invention concerne en outre un noeud destiné à être relié à d'autres noeuds organisés suivant un anneau, ledit anneau étant doté de ressources de transmission dont l'une au moins est une ressource, dite de contrôle, dédiée à la transmission d'informations de contrôle et associée à au moins une ressource de transmission, ledit noeud comprenant :
- des moyens de réception d'au moins une information relative à une réservation d'une fenêtre de transmission de la ressource de transmission reçue sur la ressource de contrôle associée ;
- des moyens de détermination d'état de réservation de ressources de transmission, agencés pour déterminer un état de réservation de ressources de transmission ;
caractérisé en ce qu'il comprend en outre :
- des moyens de comparaison, agencés pour comparer des volumes de réservations de ressources de l'anneau respectivement effectuées par deux noeuds pendant une période de référence ;
- des moyens de préemption, agencés pour préempter une réservation d'une fenêtre de transmission effectuée par un autre noeud en fonction du résultat fourni par les moyens de comparaison.

L'invention concerne également un système de communication comprenant une pluralité de noeuds tel que décrits précédemment.

L'invention concerne en outre un programme d'ordinateur comportant des instructions pour la mise en oeuvre du procédé de communication entre une pluralité de noeuds, tel que décrit précédemment, par un noeud, les noeuds étant organisés suivant un anneau, lorsque ce programme est exécuté par un processeur.

L'invention sera mieux comprise à l'aide de la description suivante d'un mode de réalisation particulier du procédé de l'invention, en référence aux dessins annexés sur lesquels :
- la figure 1 représente un réseau de communication, dans lequel des noeuds sont organisés en anneau ;
- la figure 2 représente les étapes du procédé de communication entre les noeuds selon un mode particulier de réalisation de l'invention ;
- la figure 3 représente un schéma bloc fonctionnel d'un noeud selon un mode particulier de réalisation de l'invention.

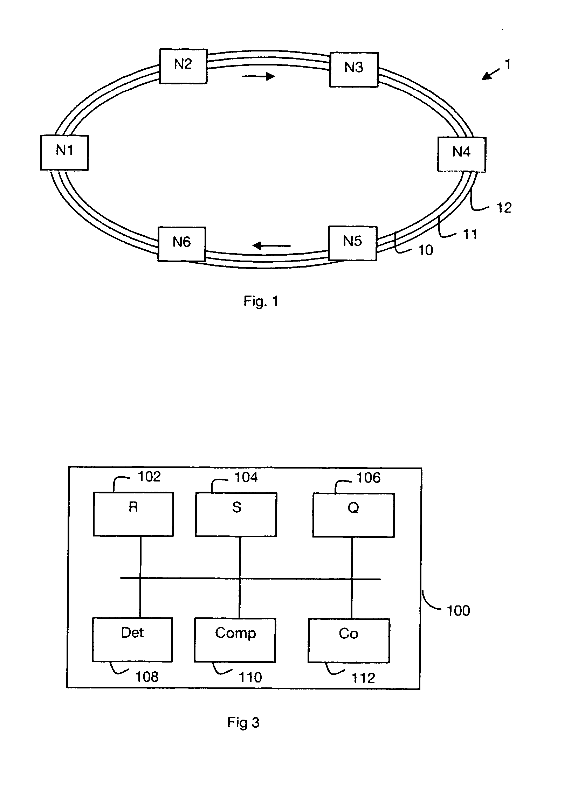

Sur la figure 1, est représentée une pluralité de noeuds N1 à N6 organisés suivant un anneau 1. Un noeud N1-N6 de l'anneau 1 est susceptible de communiquer avec n'importe quel autre noeud de l'anneau. L'anneau 1 est doté de M ressources physiques, dont trois d'entre elles sont représentées et référencées 10, 11, 12 sur la figure 1. Il s'agit par exemple de différentes longueurs d'onde sur un lien optique. Chaque ressource physique est divisée en une pluralité d'intervalles de temps ou fenêtres de transmission. Une ressource de transmission est constituée des parties d'une ressource physique de l'anneau accessibles pendant la fenêtre de transmission. Il s'agit par exemple d'intervalles de temps de durée fixe, numérotés de 1 à L. Dans certains modes de réalisation, L peut prendre une valeur égale à un. Ainsi une ressource physique "i" est divisée en L ressources de transmission, notées P(i,j) où i varie de 1 à M et j de 1 à L. Un seul sens de rotation est représenté sur la figure 1 par des flèches, afin de ne pas surcharger la figure 1. Un deuxième anneau correspondant au sens de rotation contraire peut être prévu afin d'obtenir une configuration de réseau résistante aux pannes. Une des ressources physiques est plus particulièrement dédiée à la transmission d'informations de contrôle dans l'anneau et ainsi supporte des ressources de transmission particulières appelées par la suite ressources de contrôle et notées C(j) où j varie de 1 à L. Une ressource de contrôle C(j) est associée à une ou des ressources de transmission P(i,j), correspondant ainsi à une même fenêtre de transmission j. Ainsi une ressource de contrôle définie par une fenêtre de transmission donnée transmet à destination des noeuds de l'anneau les informations de contrôle relatives aux ressources de transmission définies par la même fenêtre donnée. Les informations de contrôle comprennent en particulier pour chaque ressource de transmission P(i,j) à laquelle la ressource de contrôle C(j) est associée, et ainsi pour une fenêtre de transmission donnée :
- une information relative à un état d'occupation de la fenêtre de transmission, "libre" ou "occupé" ;
- si l'état d'occupation est "occupé", un identifiant du noeud destinataire des données contenues dans la fenêtre de transmission ;
- une information relative à un état de réservation, "réservé" ou "non réservé", indiquant si un noeud a demandé une réservation de la fenêtre de transmission ;
- si l'état de réservation est "réservé", un identifiant d'un noeud de l'anneau ayant effectué la demande de réservation.

Il est ici souligné que l'identifiant du noeud destinataire des données peut également prendre une valeur indiquant qu'un ensemble de noeuds de l'anneau est destinataire des données lors de la mise en oeuvre d'un mode diffusé.

Il est à noter que, lorsqu'un noeud modifie l'état de réservation dans les informations de contrôle, il s'agit alors d'une réservation pour l'occurrence suivante de la fenêtre de transmission et non directement pour la fenêtre de transmission donnée.

A titre d'exemple, les données transmises sur la ressource de contrôle peuvent être reçues de façon anticipée par rapport aux ressources de transmission, afin de permettre à un noeud de recevoir les informations de contrôle, de les interpréter et de décider du traitement à effectuer sur les ressources de transmission à venir. Il peut s'agir par exemple d'un décalage d'une durée d'une fenêtre de transmission.

Chaque noeud N1-N6 de l'anneau 1 comprend des moyens de lecture de données 102 reçues sur l'anneau 1 au moyen des ressources de transmission, notés "S" sur la figure 3 et des moyens d'émission de données 104 au moyen de celles-ci, notés "R" sur la figure 3. Les moyens d'émission de données 104 sont agencés pour émettre des données mémorisées dans une ou plusieurs files d'attente 106, notées "Q" sur la figure 3.

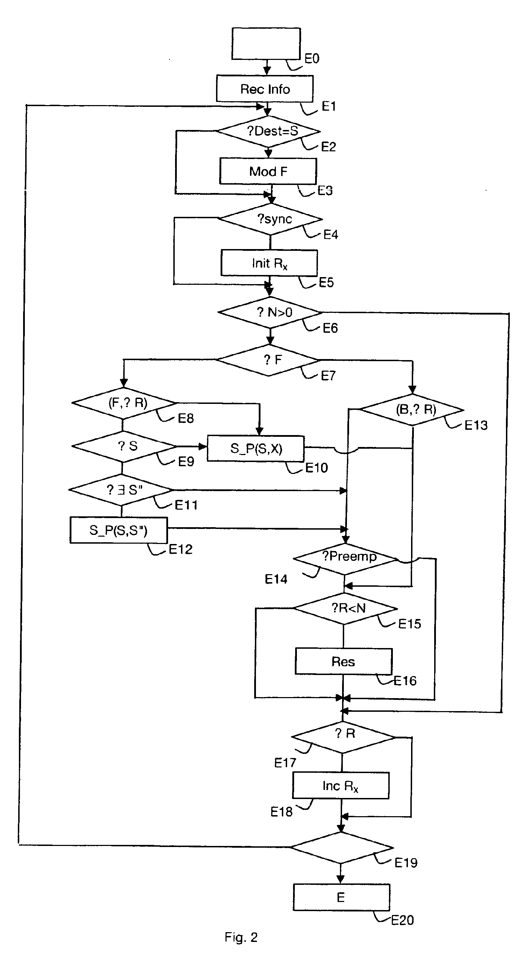

Le procédé de communication entre une pluralité de noeuds va maintenant être décrit en relation avec la figure 2. On se place par la suite au niveau du noeud N1.

Par la suite, les fenêtres de transmission sont de durée fixe.

Le procédé débute à une étape E0 pour le traitement d'une fenêtre de transmission.

Dans une étape E1 de réception, notée "Rec Info" sur la figure 2, le noeud N1 reçoit sur la ressource de contrôle des informations de contrôle relatives aux états d'occupation et de réservation de cette même fenêtre de transmission sur chacune des ressources de transmission. Le cas échéant, il reçoit également un identifiant du noeud destinataire des données et un identifiant du noeud ayant réservé la ressource de transmission correspondante.

On se place par la suite au niveau d'une ressource de transmission donnée, les différentes étapes étant réitérées pour les différentes ressources de transmission auxquelles la ressource de contrôle considérée est associée.

Dans une étape E2 de test du noeud destinataire, notée "?Dest=S" sur la figure 2, le noeud N1 vérifie si l'état d'occupation de la ressource de transmission donnée est "occupé" et s'il est le destinataire des données qui vont être reçues sur celle-ci.

Si tel est le cas, c'est-à-dire l'état d'occupation est "occupé" et le noeud N1 est le destinataire de ces données, il modifie, dans une étape E3 de modification de l'état d'occupation de la ressource de transmission, notée "Mod F" sur la figure 2, l'état d'occupation de "occupé" à "libre". Il active également les moyens de lecture de données 102 en vue de la réception des données sur la ressource de transmission. Il est à noter que dans le cas où le noeud N1 n'est pas le seul destinataire de ces données (mode diffusé), l'état d'occupation de la ressource de transmission n'est pas modifié, d'autres noeuds étant destinataires de ces données.

Si ce n'est pas le cas, c'est-à-dire l'état d'occupation est "libre" ou l'état d'occupation est "occupé" mais le noeud destinataire n'est pas le noeud N1, aucun traitement n'est effectué.

Dans une étape E4 de synchronisation, notée "'?sync" sur la figure 2, le noeud N1 vérifie si cette fenêtre de transmission comprend une information de synchronisation. Par exemple, il peut s'agir de la détection d'une fenêtre de référence ou de synchronisation, telle que celle correspondant à un intervalle de temps numéroté 0. Si tel est le cas, le noeud N1 initialise, dans une étape E5 d'initialisation, notée "Init Rₓ" sur la figure 2, pour chacun des noeuds de l'anneau, y compris lui-même, un compteur représentatif du volume de réservations effectuées, noté Rₖ pour le noeud Nk. Le compteur est par exemple le nombre de fenêtres de transmission réservées. Cette détection d'une information de synchronisation définit le début d'une durée de référence, et par conséquent, la fin de la durée de référence précédente.

Le procédé passe ensuite à une étape E6 de test, notée "?N>0" sur la figure 2. Le noeud N1 vérifie si des paquets sont en attente de transmission sur l'anneau, mémorisés dans la file d'attente 106. Si aucun paquet n'est en attente de transmission, le procédé passe à une étape E17, décrite ultérieurement.

Si des paquets sont en attente de transmission sur l'anneau, le procédé passe à une étape E7 de test de l'état d'occupation, notée "?F" sur la figure 2.

Si l'état d'occupation est "libre", le procédé passe à une étape E8 de test de l'état de réservation, notée "(F,?R)" sur la figure 2.

Si l'état de réservation est "non réservé", dans une étape E10, notée "S_P(S,X)" sur la figure 2, le noeud N1 modifie l'état d'occupation de la ressource de transmission donnée de "libre" à "occupé" et sélectionne des données en attente de transmission dans la file d'attente 106. Il active les moyens d'émission 104 afin que les données sélectionnées soient émises dans la ressource de transmission. Il décrémente le nombre de paquets en attente de transmission en fonction du volume des données sélectionnées. Le procédé passe ensuite à une étape E15, qui sera décrite ultérieurement.

Si l'état de réservation est "réservé", dans une étape E9 de vérification de la réservation, notée "?S" sur la figure 2, le noeud N1 vérifie, à l'aide des informations de contrôle, s'il a lui-même effectué la réservation lors du passage précédent de la fenêtre de transmission. Si tel est le cas, le procédé passe à l'étape E10 décrite précédemment.

S'il n'est pas le noeud ayant réservé, dans une étape E11 de recherche, notée "?∃S"" sur la figure 2, le noeud N1 détermine s'il existe un noeud intermédiaire situé sur l'anneau, en fonction du sens de rotation de l'anneau, entre lui-même et le noeud Nr ayant effectué la réservation et pour lequel au moins un paquet est à transmettre.

Si un tel noeud intermédiaire n'existe pas, le procédé passe à une étape E14, qui sera décrite ultérieurement.

Si un tel noeud intermédiaire existe, dans une étape E12, notée "S_P(S,S")" sur la figure 2, le noeud N1 modifie l'état d'occupation de la ressource de transmission donnée de "libre" à "occupé" et extrait les données correspondantes de la file d'attente 106. Il active les moyens d'émission 104 afin que les données extraites soient émises sur la ressource de transmission. Il décrémente le nombre de paquets en attente de transmission en fonction du volume des données extraites. Le procédé permet ainsi une meilleure utilisation des ressources de l'anneau en permettant une réutilisation spatiale de la fenêtre de transmission d'une ressource de transmission libre mais réservée par l'autre noeud. Le procédé passe ensuite à l'étape E14.

De retour à l'étape E7, si l'état d'occupation est "occupé", le procédé passe à une étape E13 de test de l'état de réservation, notée "(B,?R)" sur la figure 2.

Si l'état de réservation est "non réservé", le procédé passe à l'étape E15 décrite ultérieurement.

Si l'état de réservation est "réservé", le procédé passe ensuite à l'étape E14.

L'étape E14, notée "'?Preemp" sur la figure 2, vise à déterminer s'il est possible de préempter la réservation de la ressource de transmission effectuée par le noeud Nr. A cet effet, le noeud N1 compare les volumes de réservations de ressources de l'anneau respectivement effectuées par le noeud N1 et par le noeud Nr, c'est-à-dire R₁ et Rᵣ.

Dans un premier mode de réalisation, on ne différencie pas les noeuds les uns par rapport aux autres. La comparaison peut alors consister à vérifier si le volume de réservations de ressources de l'anneau effectuées par le noeud Nr est supérieur d'au moins un volume prédéterminé au volume de réservations de ressources de l'anneau effectuées par le noeud N1. Si tel est le cas, on considère alors que la réservation effectuée par le noeud Nr est susceptible d'être préemptée et le procédé passe à l'étape E15, décrite ultérieurement. Dans le cas contraire, la réservation effectuée par le noeud Nr n'étant pas susceptible d'être préemptée, le procédé passe à l'étape E17.

Dans un deuxième mode de réalisation, on cherche à prendre en compte des spécificités relatives aux noeuds. Par exemple, certains noeuds transmettent des flux de données relatifs à des applications sensibles au délai d'attente par exemple. Dans ce cas, on affecte des poids différents w₁ aux différents noeuds lors d'une étape de configuration non représentée sur la figure 2. La comparaison peut alors consister à vérifier si le rapport des volumes respectifs de réservations de ressources de l'anneau effectuées par le noeud Nr et le noeud N1 sur la période de référence est supérieur au rapport de leurs poids respectifs, c'est-à-dire Rᵣ/R₁>wᵣ/w₁. Si tel est le cas, on considère alors que la réservation effectuée par le noeud Nr est susceptible d'être préemptée et le procédé passe à l'étape E15, décrite ultérieurement. Dans le cas contraire, la réservation effectuée par le noeud Nr n'étant pas susceptible d'être préemptée, le procédé passe à l'étape E17.

A l'étape E15, notée "?R<N" sur la figure 2, le noeud N1 vérifie si le volume de réservations de ressources qu'il a effectuées est inférieur à un volume de paquets en attente de transmission. Si tel est le cas et la réservation effectuée par le noeud Nr étant susceptible d'être préemptée, dans une étape E16 de réservation, notée "Res" sur la figure 2, le noeud N1 modifie dans les informations de contrôle l'identifiant du noeud ayant réservé en y insérant sa propre identité. Le procédé passe ensuite à l'étape E17. Il est souligné ici qu'il ne s'agit pas d'une préemption de la ressource elle-même mais d'une réservation pour une occurrence suivante de la fenêtre de transmission, qui va se présenter après un tour complet de l'anneau 1. Les noeuds préemptant des réservations de fenêtres de transmission en fonction d'observations réalisées sur les réservations effectuées par les autres noeuds de l'anneau, le procédé permet de répartir les ressources de transmission en fonction du fonctionnement courant sur l'anneau et de s'adapter dynamiquement en fonction des variations de trafic respectif des noeuds de l'anneau. Il présente ainsi l'avantage d'être dynamique par rapport aux mécanismes connus de l'état de la technique réactifs et préventifs.

Dans le cas contraire, c'est-à-dire le volume de réservations de ressources effectuées étant suffisant pour transmettre les paquets en attente de transmission, il n'est pas nécessaire de préempter une réservation effectuée par un autre noeud. Le procédé passe à l'étape E17.

Lors de l'étape E17 de test, notée "'?R" sur la figure 2, le noeud N1 vérifie si l'état de réservation indique "réservé". Si tel est le cas, dans une étape E18, notée "Inc Rₓ" sur la figure 2, le noeud N1 modifie le compteur Rᵣ représentatif du volume de réservations effectuées associé au noeud Nr ayant effectué la réservation de ressources.

Lors d'une étape E19, le noeud N1 vérifie si toutes informations de contrôle reçues à l'étape E1 ont été traitées. Si ce n'est pas le cas, le procédé retourne à l'étape E2.

Lorsque toutes les informations de contrôle reçues à l'étape E1 ont ainsi été traitées, par exécution des étapes E2 à E19 pour chaque ressource de transmission à laquelle la ressource de contrôle est associée, lors d'une étape E20, le noeud N1 transmet sur la ressource de contrôle les nouvelles informations de contrôle, obtenues à l'issue de l'exécution des étapes du procédé.

En variante à ces modes de réalisation, il est également possible de ne pas mettre en oeuvre l'étape E15 et ainsi de réserver la fenêtre de transmission dès qu'il est décidé que la réservation effectuée par un autre noeud est susceptible d'être préemptée. Cette variante permet d'améliorer les mécanismes connus cités précédemment.

Dans une autre variante à ces modes de réalisation, il est également possible de ne pas mettre en oeuvre l'étape E11. Dans ce cas, l'utilisation des ressources de l'anneau n'est pas complètement optimisée mais le procédé tel que décrit apporte également une amélioration aux mécanismes connus cités précédemment.

Dans le mode de réalisation tel que décrit, le compteur Rₖ est représentatif du volume de réservations effectuées par le noeud Nk pour une ressource de transmission donnée. Ce mode de réalisation est particulièrement bien adapté dans le cas où les ressources de l'anneau sont réparties entre des groupes de noeuds, par exemple un premier groupe de noeuds pairs et un deuxième groupe de noeuds impairs. Il est également possible d'adapter sans difficulté particulière le procédé avec un compteur représentatif du volume de réservations effectuées par le noeud Nk pour l'ensemble des ressources de transmission auxquelles une ressource de contrôle est associée ou pour l'ensemble des ressources de l'anneau.

Le procédé a été décrit pour des modes de réalisation dans lequel les fenêtres de transmission sont de durée fixe. Il est également possible de le mettre en oeuvre pour un anneau dans lequel la transmission de données s'effectue de manière asynchrone. Dans cet autre mode de réalisation, les fenêtres de transmission peuvent être de durée variable. A l'étape E4 du procédé, le noeud N1 vérifie si cette fenêtre de transmission comprend une information de synchronisation, par exemple un drapeau particulier. Le compteur Rₖ représentatif du volume de réservations effectuées par le noeud Nk correspond dans ce cas à la durée cumulée de fenêtres de transmission réservées.

Un noeud 100 destiné à être mis en oeuvre dans un anneau va maintenant être décrit en relation avec la figure 3.

Un tel noeud comprend :
- les moyens 102 de lecture de données sur l'anneau :
- les moyens 104 d'émission de données sur l'anneau ;
- la ou les files d'attente 106 de données en attente de transmission ;
- un module 108 de détermination d'états de ressources de transmission, noté "Det" sur la figure 3 ;
- un module 110 de comparaison, noté "Comp" sur la figure 3 ;
- un module 112 de commande, noté "Co" sur la figure 3.

Le module 112 de commande est notamment agencé pour :
- commander les moyens et modules du noeud et plus précisément ;
- recevoir des données reçues sur les ressources de l'anneau en provenance des moyens 102 de lecture de données, ces données comprenant des informations de contrôle reçues sur une ressource de contrôle ;
- déterminer le début d'une période de référence ;
- transférer les informations de contrôle au module 108 de détermination d'états et pour recevoir en réponse un état de réservation d'une ressource de transmission et un identifiant d'un noeud ayant réservé ;
- sélectionner au moins un paquet à transmettre dans la ou les file(s) d'attente 106 et le transférer aux moyens 104 d'émission ;
- commander le module 110 de comparaison pour deux noeuds et pour recevoir en retour un résultat de comparaison des volumes de réservations effectuées par les deux noeuds ;
- préempter une réservation d'une fenêtre de transmission effectuée par un autre noeud en fonction du résultat reçu du module 110 ;
- transférer les informations de contrôle aux moyens 104 d'émission.

Les moyens 102 de lecture de données sont agencés pour recevoir des données sur les ressources de l'anneau et pour transférer des données reçues au module 112 de commande.

Les moyens 104 d'émission de données sont agencés pour recevoir des données du module 112 de commande des données et pour émettre ces données sur les ressources de l'anneau.

Le module 108 de détermination d'états est agencé pour recevoir des informations de contrôle en provenance du module 112 de commande, pour déterminer un état de réservation d'une ou de ressources de transmission et pour transférer cet état de réservation au module 112 de commande.

Le module 110 de comparaison est agencé pour comparer des volumes de réservations de ressources de l'anneau respectivement effectuées par deux noeuds pendant une période de référence et pour transférer un résultat de comparaison au module 112 de commande.

Dans une variante, le module 110 de comparaison est en outre agencé pour comparer un volume de réservations effectuées par un noeud et un volume de paquets mémorisés dans la file d'attente 106.

Optionnellement, le module 108 est en outre agencé pour déterminer un état d'occupation d'une ressource de transmission à partir des informations de contrôle.

Dans une autre variante, le module 112 de commande est en outre agencé pour déterminer un noeud intermédiaire, situé entre un noeud ayant réservé et le noeud, à destination duquel au moins un paquet est mémorisé dans la ou les file(s) d'attente 106 et pour transférer aux moyens 104 d'émission le ou les paquets à transmettre.

Les modules 106-112 du noeud sont agencés pour mettre en oeuvre le procédé de communication entre une pluralité de noeuds précédemment décrit. Il s'agit de préférence de modules logiciels comprenant des instructions logicielles pour faire exécuter les étapes du procédé précédemment décrit, mises en oeuvre par un noeud. L'invention concerne donc aussi :
- un programme d'ordinateur comportant des instructions pour la mise en oeuvre par un noeud du procédé de communication entre une pluralité de noeuds précédemment décrit, les noeuds étant organisés suivant un anneau, lorsque ce programme est exécuté par un processeur ;
- un support d'enregistrement lisible par un noeud sur lequel est enregistré le programme d'ordinateur précédemment décrit.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système de communication comprenant une pluralité de noeuds, organisés suivant un anneau et tels que décrits précédemment.

## Revendications

1. Procédé de communication entre une pluralité de noeuds (N1-N6), les noeuds étant organisés suivant un anneau (1), ledit anneau étant doté de ressources de transmission dont l'une au moins est une ressource, dite de contrôle, dédiée à la transmission d'informations de contrôle et associée à au moins une ressource de transmission, ledit procédé comprenant l'étape suivante mise en oeuvre par un noeud de l'anneau :
- une étape de réception (E1) d'au moins une information relative à une réservation d'une fenêtre de transmission de la ressource de transmission reçue sur la ressource de contrôle associée ;
**caractérisé en ce que**, si la fenêtre de transmission est réservée par un autre noeud de l'anneau, il comprend en outre :
- une étape (E14) de comparaison de volumes de réservations de ressources de l'anneau respectivement effectuées par le noeud et l'autre noeud pendant une période de référence ;
- une étape (E16) de préemption de ladite réservation de la fenêtre de transmission en fonction du résultat de l'étape de comparaison.

2. Procédé selon la revendication 1, dans lequel l'étape de préemption (E16) est effectuée lorsque le volume de réservations de ressources de l'anneau effectuées par l'autre noeud sur la période de référence est supérieur d'un volume prédéterminé à celui du noeud.

3. Procédé selon la revendication 1, dans lequel, un poids étant affecté par noeud, l'étape de préemption (E16) est effectuée lorsque le rapport des volumes respectifs de réservations de ressources de l'anneau effectuées par l'autre noeud et le noeud sur la période de référence est supérieur au rapport des poids respectifs desdits noeuds.

4. Procédé selon la revendication 1. dans lequel l'étape de préemption est effectuée (E15) en outre en fonction d'un résultat d'une étape de comparaison entre le volume de réservations de ressources de l'anneau effectuées par le noeud et un volume de paquets en attente de transmission par le noeud.

5. Procédé selon la revendication 1, comprenant en outre lorsque la fenêtre de transmission est libre mais réservée par l'autre noeud :
- une étape (E11) de recherche d'un noeud intermédiaire situé dans l'anneau entre le noeud et ledit autre noeud et à destination duquel au moins un paquet est à transmettre ;
- si un tel noeud intermédiaire est trouvé, une étape de transmission d'au moins un paquet à destination du noeud intermédiaire dans la fenêtre de transmission.

6. Noeud destiné à être relié à d'autres noeuds organisés suivant un anneau, ledit anneau étant doté de ressources de transmission dont l'une au moins est une ressource, dite de contrôle, dédiée à la transmission d'informations de contrôle et associée à au moins une ressource de transmission, ledit noeud comprenant :
- des moyens (102) de réception d'au moins une information relative à une réservation d'une fenêtre de transmission de la ressource de transmission reçue sur la ressource de contrôle associée ;
- des moyens (108) de détermination d'état de réservation de ressources de transmission, agencés pour déterminer un état de réservation de ressources de transmission ;
**caractérisé en ce qu'**il comprend en outre :
- des moyens (110) de comparaison, agencés pour comparer des volumes de réservations de ressources de l'anneau respectivement effectuées par deux noeuds pendant une période de référence ;
- des moyens (112) de préemption, agencés pour préempter une réservation d'une fenêtre de transmission effectuée par un autre noeud en fonction du résultat fourni par les moyens de comparaison.

7. Système de communication comprenant une pluralité de noeuds selon la revendication 6.

8. Programme d'ordinateur comportant des instructions pour la mise en oeuvre du procédé de communication entre une pluralité de noeuds selon la revendication 1 par un noeud, les noeuds étant organisés suivant un anneau, lorsque ce programme est exécuté par un processeur.

## Claims

1. Method for communicating between a plurality of nodes (N1-N6), the nodes being organized as a ring (1), said ring being provided with transmission resources at least one of which is a resource, known as a control resource, dedicated to the transmission of items of control information and associated with at least one transmission resource, said method comprising the following step carried out by one node of the ring:
- a receiving step (E1) for receiving at least one item of information relating to a reservation of a transmission window of the transmission resource received on the associated control resource;
**characterized in that**, if the transmission window is reserved by another node of the ring, it also comprises:
- a comparison step (E14) for comparing volumes of ring-resource reservations respectively made by the node and the other node during a reference period;
- a pre-emption step (E16) for pre-empting said reservation of the transmission window depending on the result of the comparison step.

2. Method according to Claim 1, in which the pre-emption step (E16) is carried out when the volume of ring-resource reservations made by the other node over the reference period is greater by a predetermined volume than that of the node.

3. Method according to Claim 1, in which, since a weight has been assigned to each node, the pre-emption step (E16) is carried out when the ratio of the respective volumes of ring-resource reservations made by the other node and the node over the reference period is higher than the ratio of the respective weights of said nodes.

4. Method according to Claim 1, in which the pre-emption step is carried out (E15) also as a function of a result of a comparison step between the volume of ring-resource reservations made by the node and a volume of packets awaiting transmission by the node.

5. Method according to Claim 1, also comprising, when the transmission window is free but reserved by the other node:
- a search step (E11) for searching for an intermediate node situated in the ring between the node and said other node and to which at least one packet is to be transmitted;
- if such an intermediate node is found, a step of transmitting at least one packet to the intermediate node in the transmission window.

6. Node designed to be connected to other nodes organized as a ring, said ring being provided with transmission resources at least one of which is a resource, known as a control resource, dedicated to the transmission of items of control information and associated with at least one transmission resource, said node comprising:
- receiving means (102) for receiving at least one item of information relating to a reservation of a transmission window of the transmission resource received on the associated control resource;
- determination means (108) for determining the state of reservation of transmission resources, arranged in order to determine a transmission-resource reservation state;
**characterized in that** it also comprises:
- comparison means (110) arranged for comparing volumes of ring-resource reservations respectively made by two nodes during a reference period;
- pre-emption means (112) arranged to pre-empt a reservation of a transmission window made by another node depending on the result supplied by the comparison means.

7. System of communication comprising a plurality of nodes according to Claim 6.

8. Computer program comprising instructions for the application of the method for communicating between a plurality of nodes according to Claim 1 by a node, the nodes being organized as a ring, when this program is executed by a processor.

## Patentansprüche

1. Verfahren zur Kommunikation zwischen mehreren Knoten (N1-N6), wobei die Knoten in einem Ring (1) angeordnet sind, wobei der Ring mit Übertragungsressourcen ausgestattet ist, von denen mindestens eine eine so genannte Kontrollressource ist, die für die Übertragung von Kontrollinformationen bestimmt und mindestens einer Übertragungsressource zugeordnet ist, wobei das Verfahren den folgenden Schritt enthält, der von einem Knoten des Rings durchgeführt wird:
- einen Schritt des Empfangs (E1) mindestens einer Information bezüglich einer Reservierung eines Übertragungsfensters der Übertragungsressource, die in der zugeordneten Kontrollressource empfangen wird;
**dadurch gekennzeichnet, dass** es, wenn das Übertragungsfenster von einem anderen Knoten des Rings reserviert ist, außerdem enthält:
- einen Schritt (E14) des Vergleichs von Volumen von Reservierungen von Ressourcen des Rings, die jeweils von dem Knoten und dem anderen Knoten während einer Bezugsperiode ausgeführt wurden;
- einen Schritt (E16) der Bevorrechtigung der Reservierung des Übertragungsfensters abhängig vom Ergebnis des Vergleichsschritts.

2. Verfahren nach Anspruch 1, bei dem der Bevorrechtigungsschritt (E16) ausgeführt wird, wenn das Volumen von Reservierungen von Ressourcen des Rings, die von dem anderen Knoten in der Bezugsperiode ausgeführt wurden, um ein vorbestimmtes Volumen größer ist als dasjenige des Knotens.

3. Verfahren nach Anspruch 1, bei dem, während ein Gewicht pro Knoten zugewiesen ist, der Bevorrechtigungsschritt (E16) ausgeführt wird, wenn das Verhältnis der jeweiligen Volumen von Reservierungen von Ressourcen des Rings, die vom anderen Knoten und vom Knoten in der Bezugsperiode ausgeführt werden, höher als das Verhältnis der jeweiligen Gewichte der Knoten ist.

4. Verfahren nach Anspruch 1, bei dem der Bevorrechtigungsschritt außerdem abhängig von einem Ergebnis eines Vergleichsschritts zwischen dem Volumen von Reservierungen von Ressourcen des Rings, die von dem Knoten ausgeführt werden, und einem Volumen von Paketen ausgeführt wird (E15), die auf eine Übertragung durch den Knoten warten.

5. Verfahren nach Anspruch 1, das außerdem, wenn das Übertragungsfenster frei, aber von dem anderen Knoten reserviert ist, enthält:
- einen Schritt (E11) der Suche eines Zwischenknotens, der sich im Ring zwischen dem Knoten und dem anderen Knoten befindet, und an den mindestens ein Paket übertragen werden soll;
- wenn ein solcher Zwischenknoten gefunden wird, einen Schritt der Übertragung mindestens eines Pakets an den Zwischenknoten in dem Übertragungsfenster.

6. Knoten, der dazu bestimmt ist, mit anderen Knoten verbunden zu werden, die in einem Ring angeordnet sind, wobei der Ring mit Übertragungsressourcen versehen ist, von denen mindestens eine eine so genannte Kontrollressource ist, die für die Übertragung von Kontrollinformationen bestimmt und mindestens einer Übertragungsressource zugeordnet ist, wobei der Knoten enthält:
- Einrichtungen (102) zum Empfang mindestens einer Information bezüglich einer Reservierung eines Übertragungsfensters der Übertragungsressource, die in der zugeordneten Kontrollressource empfangen wird;
- Einrichtungen (108) zur Bestimmung des Reservierungszustands von Übertragungsressourcen, die eingerichtet sind, um einen Reservierungszustand von Übertragungsressourcen zu bestimmen;
**dadurch gekennzeichnet, dass** es außerdem enthält:
- Vergleichseinrichtungen (110), die eingerichtet sind, um Volumen von Reservierungen des Rings zu vergleichen, die jeweils von zwei Knoten während einer Bezugsperiode ausgeführt werden;
- Bevorrechtigungseinrichtungen (112), die eingerichtet sind, um eine Reservierung eines Übertragungsfensters zu bevorrechtigen, die von einem anderen Knoten ausgeführt wird, abhängig von dem von den Vergleichseinrichtungen gelieferten Ergebnis.

7. Kommunikationssystem, das mehrere Knoten nach Anspruch 6 enthält.

8. Computerprogramm, das Anweisungen für die Durchführung des Kommunikationsverfahrens zwischen mehreren Knoten nach Anspruch 1 durch einen Knoten enthält, wobei die Knoten gemäß einem Ring angeordnet sind, wenn dieses Programm von einem Prozessor ausgeführt wird.
